# EUROPEAN PATENT APPLICATION

(11) **EP 2 554 812 A1**
(43) Date of publication of application: **06.02.2013**
(21) Application number: 10849348.7
(22) Date of filing: 02.04.2010
(51) Int. Cl.: F01N 3/08, F01N 3/36

(54) **EXHAUST GAS EVACUATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: HAYAKAWA, Takeshi, Toyota-shi Aichi 471-8571 (JP); KATAYAMA, Haruyuki, Toyota-shi Aichi 471-8571 (JP)
(74) Representative: Smith, Samuel Leonard
(86) International application number: PCT/JP2010/002452
(87) International publication number: WO 2011/125098

(57) **Abstract**

An exhaust device of an internal-combustion engine provided with a catalytic converter (8) arranged in an exhaust passage (3) of the internal-combustion engine (1); a fuel supply valve (7) that is arranged on the upstream side of the catalytic converter (8) and supplies fuel into the exhaust passage (3); an ignition device (21) capable of igniting the fuel supplied from the fuel supply valve (7); a pressure regulating device (16) that regulates the pressure of the fuel supplied to the fuel supply valve (7); and a controller (10) that controls the fuel supply valve (7) and the pressure regulating device (16). The controller (10) controls the fuel supply valve (7) and the pressure regulating device (16) so as to execute at least one of a plurality of injection operations having different fuel pressures from each other and performed successively, and a single injection operation performed while changing the fuel pressure.

## Description

### Technical Field

The present invention relates to an exhaust device that can supply fuel to an exhaust passage of an internal-combustion engine.

### Background Art

An exhaust device that supplies fuel to an exhaust passage of an internal-combustion engine with the purpose of purifying exhaust has been widely used.

A device disclosed in Patent Literature 1, after starting supply of fuel to an exhaust passage, stops the supply once and monitors a degree of temperature rise caused by the start of supply, and resumes the supply of fuel on the basis of this monitoring result. In this device, since a fuel supply amount to the exhaust passage is controlled, an excessive temperature rise caused by a PM (particulate Matter) accumulated in a catalytic converter and a combustible substance such as an unburned fuel adhering to the catalytic converter can be suppressed.

A device disclosed in Patent Literature 2 includes a dispersing plate with which fuel supplied to an exhaust passage is made to collide in the exhaust passage adjacent to an upstream side of the catalytic converter. The dispersing plate is constituted by a plurality of flat plates arranged in parallel with the axial direction of the exhaust passage and in parallel with each other. By means of the dispersing plates, the fuel is widely dispersed over the entire end face on the upstream side of the catalytic converter.

### Citation List

### Patent Literature

PTL 1: Japanese Patent Laid-Open No. 2005-83353
PTL 2: Japanese Patent Laid-Open No. 2008-274852

### Summary of Invention

### Technical Problem

In an exhaust device configured to supply fuel to an exhaust passage of an internal-combustion engine, the fuel can be preferably ignited by an ignition device in addition to being supplied to a catalytic converter. However, a unit that appropriately supplies fuel to both the catalytic converter and the ignition device from a common fuel supply valve is not disclosed in Patent Literature 1 or 2.

The present invention has an object to provide a measure that appropriately supplies fuel to both the catalytic converter and the ignition device from a common fuel supply valve arranged in the exhaust passage.

### Solution to Problem

One aspect of the present invention is an exhaust device of an internal-combustion engine comprising:
a catalytic converter arranged in an exhaust passage of the internal-combustion engine;
a fuel supply valve that is arranged on the upstream side of the catalytic converter and supplies fuel into the exhaust passage;
an ignition device capable of igniting the fuel supplied from the fuel supply valve;
a pressure regulating device that regulates the pressure of the fuel supplied to the fuel supply valve; and
a controller that controls the fuel supply valve and the pressure regulating device, wherein
the controller controls the fuel supply valve and the pressure regulating device so as to execute at least one of a plurality of injection operations having different fuel pressures from each other and performed successively, and a single injection operation performed while changing the fuel pressure.

In this aspect, the fuel supplied from the common fuel supply valve into the exhaust passage is supplied to the catalytic converter and the ignition device. The pressure regulating device regulates the pressure of the fuel supplied to the fuel supply valve. The controller controls the fuel supply valve and the pressure regulating device so as to execute at least one of a plurality of injection operations having fuel pressures different from each other and performed successively, and a single injection operation performed while changing the fuel pressure. If the fuel pressure is changed, the trajectory and the dispersing degree of the fuel are changed, and thereby the fuel can be appropriately supplied from the common fuel supply valve to the catalytic converter and the ignition device.

Preferably, the ignition device is arranged in proximity to the catalytic converter, the controller causes the fuel supply valve to execute a plurality of injection operations having fuel pressures different from each other and performed successively, and the plurality of injection operations include a first injection operation having a first fuel pressure and a second injection operation executed after the first injection operation and having a second fuel pressure smaller than the first fuel pressure.

In this aspect, if the fuel supplied in the first injection operation is supplied to the catalytic converter, the temperature of its proximity is raised by heat generation of the catalytic converter, and when the second injection operation is executed after that and the fuel is supplied to the ignition device, ignition is promoted and ignition failure can be suppressed.

Preferably, an interval in a transverse direction of the exhaust passage between a heat generation portion of the ignition device and the fuel injection valve is smaller than an interval in the transverse direction of the exhaust passage between a collision point with which the fuel supplied from the fuel injection valve collides and the fuel injection valve.

In this aspect, the fuel can be appropriately supplied to the catalytic converter and the ignition device from the common fuel supply valve in accordance with the interval from the fuel supply valve. Preferably, the device further comprises a collision member with which the supplied fuel collides, and the fuel having collided with the collision member is supplied to the catalytic converter.

Measures for solving the problems in the present invention can be used in combination as much as possible. Advantageous Effects of Invention

According to the present invention, the fuel can be appropriately supplied to the catalytic converter and the ignition device from the common fuel supply valve.

### Brief Description of Drawings

Fig. 1 is a conceptual diagram of an embodiment of the present invention;
Fig. 2 is an enlarged diagram of an essential part illustrating a burner device;
Fig. 3 is a sectional view of the burner device seen from the axial direction;
Fig. 4 is a sectional view illustrating a variable fuel-pressure regulator; and

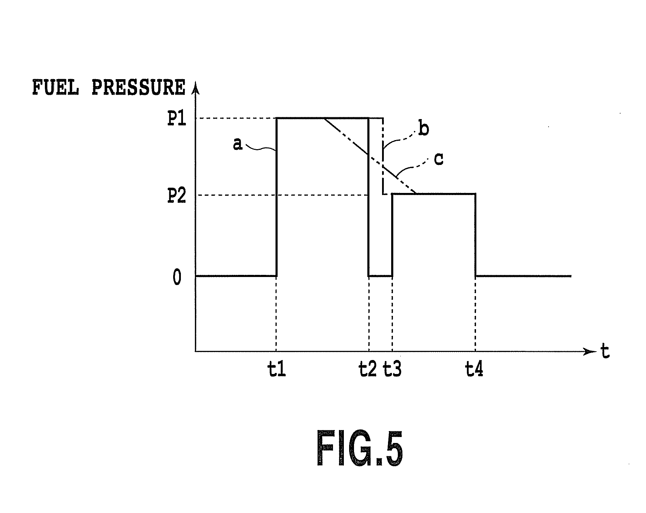

Fig. 5 is a graph showing a change in the fuel pressure.

### Description of Embodiments

An embodiment of the present invention will be described below in detail. However, the embodiment of the present invention is not limited to the following aspects but it should be noted that the present invention includes all the variations and applications encompassed by the idea of the present invention specified by claims. Dimensions, materials, shapes and the relative arrangements and the like of constituent elements described in the embodiment are not intended to limit the technical scope of the invention unless specifically described otherwise.

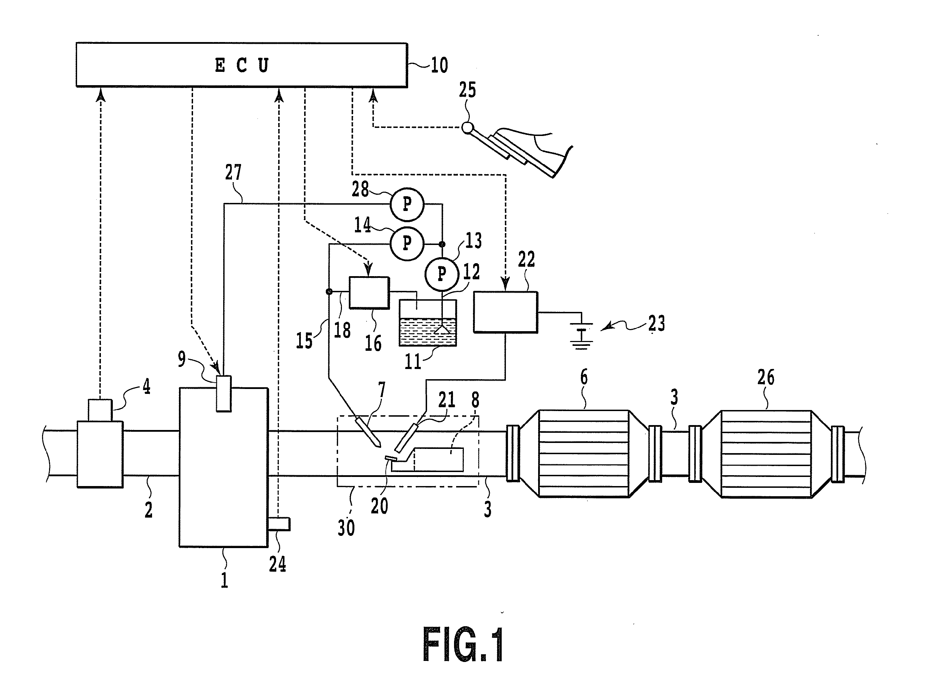

Fig. 1 illustrates an outline configuration of an engine main body 1 and its intake/exhaust system in an embodiment. The engine main body 1 is an on-vehicle four-cycle diesel engine. To the engine main body 1, an intake pipe 2 and an exhaust pipe 3 (exhaust passage) are connected. In the middle of the intake pipe 2, an air flow meter 4 that outputs a signal according to a flow rate of an intake gas flowing through the intake pipe 2 is disposed. By means of this air flow meter 4, an intake air amount into the engine main body 1 is measured.

The exhaust pipe 3 is connected to a muffler, not shown. In the middle of the exhaust pipe 3, an oxidation catalytic converter 6 and an NOx catalytic converter 26 are arranged in series in this order. The oxidation catalytic converter 6 causes unburned components such as HC and CO to react with O₂ to produce CO, CO₂, H₂O and the like. As a catalytic material, Pt/CeO₂, Mn/CeO₂, Fe/CeO₂, Ni/CeO₂, Cu/CeO₂ and the like can be used, for example. The NOx catalytic converter 26 is preferably composed of a storage-reduction type NOx catalytic converter (NSR: NOx Storage Reduction). The NOx catalytic converter 26 has a function of storing NOx in the exhaust when oxygen concentration of the inflow exhaust is high and of reducing stored NOx when the oxygen concentration of the inflow exhaust is lowered and there is a reduction component (such as fuel and the like). The NOx catalytic converter 26 may be a selective-reduction type NOx catalytic converter (SCR: Selective Catalytic Reduction).

On the upstream side of the oxidation catalytic converter 6 in the exhaust pipe 3, a fuel injection valve 7, a pretreatment catalytic converter 8, and a glow plug 21 are arranged. The fuel injection valve 7, the pretreatment catalytic converter 8, and the glow plug 21 constitute a burner device 30.

The fuel injection valve 7 can add liquid fuel (light oil) into the exhaust. A fuel tank 11 is connected to the fuel injection valve 7 via a fuel suction pipe 12 through a low-pressure fuel pump 13, a high-pressure fuel pump 14, a fuel supply pipe 15 and a variable fuel-pressure regulator 16. The fuel pumps 13 and 14 take in fuel stored in the fuel tank 11 via the fuel intake pipe 12 and discharges the fuel into the fuel supply pipe 15 so that the fuel is supplied to the fuel injection valve 7. In a pipeline 27 to an in-cylinder fuel injection valve 9, a high-pressure fuel pump 28 is disposed. The fuel pumps 13, 14 and 28 are mechanically driven, for example, and are operated by using a driving force of an output shaft (crank shaft), not shown, of the engine main body 1. At least one of the fuel pumps 13, 14 and 28 may be electrically driven.

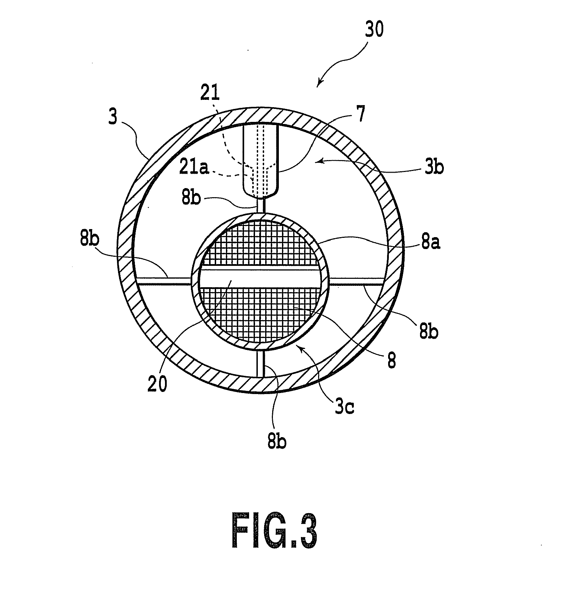

The variable fuel-pressure regulator 16 regulates the pressure of the fuel discharged from the high-pressure fuel pump 14. As shown in Fig. 3, the variable fuel-pressure regulator 16 is provided with a needle valve 17. This needle valve 17 is composed of a valve seat 17b having an orifice 17a opened in a branch passage 18 branching from the fuel supply pipe 15 and a needle 17c, which is adjacent to this valve seat 17b and opens/closes the orifice 17a. The variable fuel-pressure regulator 16 is further provided with a magnetic armature, not shown, connected integrally to the needle valve 17, a spring, not shown, that urges this armature downward (in a direction to close the needle valve 17), and a coil 19 that generates a magnetic flux in a magnetic circuit composed of the armature and a magnetic core, not shown.

If the magnitude of a current to be supplied to the coil 19 is controlled on the basis of the required fuel pressure, and the magnetic flux in the magnetic circuit composed of the magnetic core and the armature is changed, the force to urge the armature downward is controlled, the urging force of the spring is assisted, and the opening degree of the needle valve 17 is adjusted.

When electricity is not supplied to the coil 19, the needle valve 17 is opened to the most, and the fuel pressure at this time becomes a minimum pressure P2 (5 MPa, for example). If the current to be supplied to the coil 19 is gradually increased, the needle valve 17 is gradually closed, and the fuel pressure is raised. When the supply current is at the maximum, the discharged fuel is controlled to a maximum pressure P1 (10 MPa, for example). The fuel-pressure regulator may be another type such that a spring pressure of the spring is set at a value corresponding to the maximum fuel pressure and the fuel pressure is adjusted by urging and compressing the armature upward by the coil 19, for example.

In a portion between the fuel injection valve 7 and the oxidation catalytic converter 6 in the exhaust pipe 3, the pretreatment catalytic converter 8 that modifies the fuel injected from the fuel injection valve 7 is disposed. This pretreatment catalytic converter 8 can be constituted by making a carrier made of zeolite carry rhodium or the like, for example.

When fuel is supplied to the pretreatment catalytic converter 8, if the pretreatment catalytic converter 8 has been activated at that time, the fuel is oxidized in the pretreatment catalytic converter 8, and the temperature of the pretreatment catalytic converter 8 is raised by oxidation reaction heat generated at this time. Also, if the temperature of the pretreatment catalytic converter 8 becomes high, hydrocarbon with the large carbon number in the fuel is decomposed to generate hydrocarbon with the small carbon number of high reactivity, and whereby the fuel is modified to fuel with high reactivity. In other words, the pretreatment catalytic converter 8 constitutes a quick heat generator that quickly generates heat on one hand and also constitutes a modified fuel discharger that discharges modified fuel on the other hand. Also, a part of or the whole of the fuel supplied from the fuel injection valve 7 is temperature-raised or ignited by the glow plug 21, and whereby the temperature rise of the exhaust is promoted.

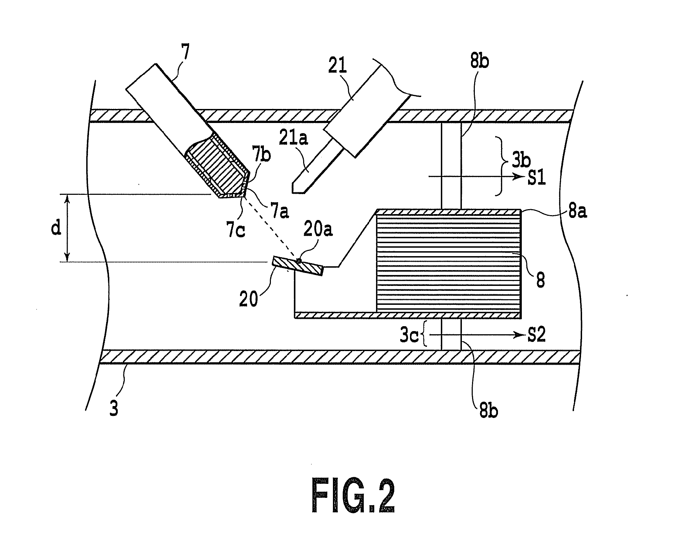

In Fig. 2, an outer diameter of the pretreatment catalytic converter 8 is smaller than an inner diameter of the exhaust pipe 3, and if the pretreatment catalytic converter 8 is contained in the exhaust pipe 3, the exhaust can pass through a catalytic bypass path, which is a gap between an outer peripheral face of the pretreatment catalytic converter 8 and an inner peripheral face of the exhaust pipe 3. The pretreatment catalytic converter 8 is a so-called straight-flow type in which individual cells are communicated from the upstream to the downstream. The pretreatment catalytic converter 8 is arranged in a substantially cylindrical outer frame 8a, and this outer frame 8a is supported in the exhaust pipe 3 by a plurality of stays 8b arranged substantially radially. The pretreatment catalytic converter 8 is surrounded by the catalytic bypass path substantially over the entire circumference except the stays 8b.

As shown in Fig. 3, the exhaust pipe 3 is formed substantially cylindrically. Since the axis center in the exhaust flow direction in the pretreatment catalytic converter 8 is biased downward from the axis center in the exhaust flow direction of the exhaust pipe 8, the above-described catalytic bypass path includes a wider-side bypass path 3b having a wider upper side and a narrower-side bypass path 3c having a narrower lower side in the figure.

On the front end portion of the outer frame 8a, a substantially flat collision plate 20 is fixed. The collision plate 20 is arranged at a position biased downward in the exhaust pipe 3. The collision plate 20 can be formed from a material excellent in heat resistance and impact resistance such as SUS. The fuel injection valve 7 injects fuel downward to the collision plate 20. The trajectory of the fuel supplied from the fuel injection valve 7 includes a component in a direction transverse to the exhaust pipe 3. The collision plate 20 promotes atomization of the fuel by collision with the fuel and improves dispersing and diffusing performances. The fuel having collided with the collision plate 20 is conveyed to the downstream side by an exhaust flow and is supplied mainly to the pretreatment catalytic converter 8. In order to guide the collided fuel to the pretreatment catalytic converter 8, the collision plate 20 is slightly inclined to the downstream side. A collision point 20a substantially at the center of the collision plate 20 is substantially on the axis center of the pretreatment catalytic converter 8.

The glow plug 21 is arranged on the downstream side of the fuel injection valve 7 and on the upstream side of the pretreatment catalytic converter 8. The glow plug 21 is connected to an in-vehicle DC power supply 23 via a booster circuit 22 and is capable of igniting the fuel supplied from the fuel injection valve 7 by heat generated when electricity is supplied.

As shown in Figs. 2 and 3, an interval in the transverse direction of the exhaust pipes 3 between a distal end portion 21a, which is a heat generation portion of the glow plug 21, and a distal end portion where injection holes 7a and 7b of the fuel injection valve 7 are present is smaller than an interval d in the transverse direction of the exhaust pipe 3 between the collision point 20a of the collision plate 20 with which the fuel supplied from the fuel injection valve 7 collides and the fuel injection valve 7. In other words, the distal end portion 21a of the glow plug 21 and the collision point 20a of the collision plate 20 are arranged at different positions with respect to the width direction (that is, the transverse direction) of the exhaust pipe 3. Preferably, the distal end portion of the glow plug 21 is arranged on the immediately downstream side of the distal end portion 7c where the injection holes 7a and 7b of the fuel injection valve 7 are located, that is, at a position overlapping the distal end portion 7c when seen from the flow direction of the exhaust pipe 3. When the fuel injected from the injection holes 7a and 7b has the fuel pressure raised to the maximum pressure P1 by the variable fuel-pressure regulator 16, the fuel collides with the collision point 20a of the collision plate 20, while when the fuel pressure is lowered to the minimum pressure P2, the fuel is supplied to the distal end portion 21a of the glow plug 21 by the flow of the exhaust.

The glow plug 21 is arranged in proximity to the pretreatment catalytic converter 8, and whereby heat exchange can be made with the pretreatment catalytic converter 8. That is, if the temperature of the pretreatment catalytic converter is raised, the temperature of the vicinity of the glow plug 21 is raised by the heat radiation, and ignition of the fuel is promoted.

In the engine main body 1, an ECU (Electronic Control Unit) 10, which is an electronic control unit that controls an operation state in accordance with an operation condition of the engine main body 1 and a request of a driver, is installed. This ECU 10 is composed of a CPU that executes various calculation processing relating to the control of the engine main body 1, a ROM in which programs and data required for the control are stored, a RAM which temporarily stores calculation results of the CPU and the like, input/output ports for input/output of a signal with the outside and the like.

To the ECU 10, a crank-position sensor 24 that detects a crank angle of the engine main body 1, an accelerator opening-degree sensor 25 that outputs an electric signal according to the accelerator opening degree and the like are connected through electric wiring in addition to the air flow meter 4, and their output signals are input into the ECU 10. Also, to the ECU 10, the fuel injection valve 7, an in-cylinder fuel injection valve 9 and the like are connected through electric wiring, and these opening/closing valves are controlled by the ECU 10. The ECU 10 can detect an engine rotation number on the basis of the output value of the crank-position sensor 24 and detect an engine load of the engine main body 1 on the basis of the output value of the accelerator opening-degree sensor 25.

In this embodiment, when the temperature rise processing by ignition of the fuel, the oxidation processing for the pretreatment catalytic converter 8 and the oxidation catalytic converter 6, the NOx reduction processing and SOx poisoning recovery processing for the NOx catalytic converter 26 are executed, the ECU 10 controls the fuel injection valve 7 so as to inject the fuel into the exhaust, and this fuel is supplied to the pretreatment catalytic converter 8, the oxidation catalytic converter 6, and the NOx catalytic converter 26. A part of the supplied fuel is ignited by the glow plug 21, while the other portion mainly in the liquid phase is supplied to the pretreatment catalytic converter 8.

An injection amount of the fuel injected by the fuel injection valve 7 can be set for individual controls such as the above-described NOx reduction processing, SOx poisoning recovery processing, PM regeneration processing and the like. In the ROM of the ECU 10, a target total injection amount calculation map for calculating a target total injection amount in compliance with the operation state of the engine main body 1 is stored for each of the above processing types (temperature rise processing by ignition of the fuel, oxidation processing, NOx reduction processing, SOx poisoning recovery processing, PM regeneration processing and the like). When the fuel injection control is to be executed, the ECU 10 detects an engine rotation number, an accelerator opening degree, and an intake air amount, makes an access to the target total injection amount calculation map by using them as parameters, and calculates the target total injection amount. The ECU 10 calculates time for valve opening so that the fuel in the target total injection amount is injected from the fuel injection valve 7. Then, the ECU 10 opens the fuel injection valve 7 by sending an instruction to the fuel injection valve 7 (or in detail, a driving mechanism (not shown) that opens/closes and drives the fuel injection valve 7) and closes the valve when the calculated time for valve opening has elapsed.

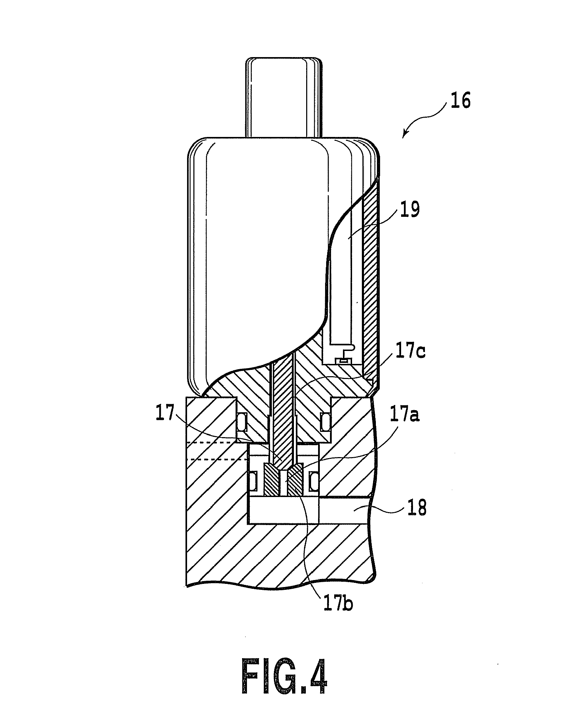

In this embodiment configured as above, the ECU 10 controls the fuel injection valve 7 and the variable fuel-pressure regulator 16 so as to execute plural injection operations having different fuel pressures from each other and performed successively. That is, the ECU 10 first injects the fuel with the maximum pressure P1 (a solid line a, t1 to t2 in Fig. 4) provided that a predetermined fuel supply condition is met and then, inj ects the fuel with the minimum pressure P2 (from t3 to t4). Change of the injection pressure is made by controlling the variable fuel-pressure regulator 16. When the fuel pressure is to be changed, the injection by the fuel injection valve 7 is closed once and an intermission (from t2 to t3) is provided between the injection with the maximum pressure P1 and the injection with the minimum pressure P2. This intermission is preferably set to a length such that the pretreatment catalytic converter 8 generates heat well by the first injection with the maximum pressure P1 and aids the subsequent ignition. However, transition may be made from the injection with the maximum pressure P1 to the injection with the minimum pressure P2 in steps as indicated by a one-dot chain line b in Fig. 4 without providing such an intermission.

The fuel injected from the fuel injection valve 7 with the maximum pressure P1 collides with the collision plate 20, and the fuel reflected or having adhered is supplied to the pretreatment catalytic converter 8 by the exhaust flow. The collision plate 20 promotes atomization of the fuel by collision with the fuel and improves dispersing and diffusing performances. By means of the supply of the fuel, the temperature of the pretreatment catalytic converter 8 is raised, and the supplied fuel is modified to fuel with high reactivity. Since the modified fuel is supplied to the oxidation catalytic converter 6 and/or the NOx catalytic converter 26, the PM regeneration processing, the NOx reduction processing, the SOx poisoning recovery processing and the like can be smoothly executed.

The fuel injected with the minimum pressure P2 does not reach the collision plate 20 but is supplied to the distal end portion of the glow plug 21 by the flow of the exhaust and ignited. Since the temperature of the pretreatment catalytic converter 8 has been raised by the preceding injection with the maximum pressure P1, the temperature of the vicinity of the glow plug 21 is raised by the heat radiation and ignition of the fuel is promoted.

As described above, in this embodiment, the ECU 10 controls the fuel supply valve 7 and the variable fuel-pressure regulator 16 so as to execute a plurality of injection operations having fuel pressures different from each other and performed successively. If the fuel is supplied with the maximum pressure P1 all the time, the fuel would not be distributed in the vicinity of the glow plug 21, unsuitably for ignition by the glow plug 21. On the other hand, if a collision member such as the collision plate 20 is arranged close to the distal end portion of the fuel supply valve 7, it would be suitable for ignition by the glow plug 21, but supply of the fuel to the pretreatment catalytic converter 8 would become insufficient. In contrast, in this embodiment, since a plurality of injection operations are executed with fuel pressures different from each other and performed successively, the trajectory and the degree of dispersion of the fuel are changed, and thereby the fuel can be appropriately supplied to both the pretreatment catalytic converter 8 and the glow plug 21 from the common fuel supply valve 7.

Also, the glow plug 21 is arranged in proximity to the pretreatment catalytic converter 8, and the plurality of injection operations include the first injection operation having the maximum fuel pressure P1 and the second injection operation executed after the first injection operation and having the minimum fuel pressure P2 smaller than the maximum fuel pressure P1. As a result of this, when the fuel supplied in the first injection operation is supplied to the pretreatment catalytic converter 8, the temperature of the vicinity is raised by heat generated in the pretreatment catalytic converter 8 and thus, when the second injection operation is executed after that and the fuel is supplied to the glow plug 7, ignition is promoted and ignition failure can be suppressed.

Also, the trajectory of the fuel supplied from the fuel supply valve 7 includes a component in a direction crossing the exhaust pipe 3, and the interval in the transverse direction of the exhaust pipe 3 between the heat generation portion of the glow plug 21 and the fuel injection valve 7 is smaller than the interval in the transverse direction of the exhaust pipe 3 between the collision point 20a with which the fuel supplied from the fuel injection valve 7 collides and the fuel injection valve 7. As a result of this, the fuel can be appropriately supplied to the pretreatment catalytic converter 8 and the glow plug 21 from the common fuel supply valve 7 in accordance with the interval in the transverse direction between the fuel supply valve 7 and the exhaust pipe 3.

The present invention has been described with some degree of specificity, but it should be understood that various alterations and changes can be made without deviating from the spirit or scope of the claimed invention. The embodiment of the present invention is not limited by each of the above-described aspects but the present invention includes all the variations and applications encompassed by the idea of the present invention specified by claims. Therefore, the present invention should not be interpreted in a limited manner but can be applied to any arbitrary technologies belonging to the scope of the idea of the present invention. Means for solving the problems in the present invention can be used in combination as much as possible.

For example, the ECU 10 may have a single injection operation executed by the fuel injection valve 7 while continuously changing the fuel pressure as indicated by a two-dot chain line c in Fig. 4. The ECU 10 can execute injection with a pattern other than the above by controlling the variable fuel-pressure regulator 16 and the fuel injection valve 7. For example, a plurality of injection operations may be executed while continuously changing the fuel pressure, and the injection executed while continuously changing the fuel pressure and the injection with a constant fuel pressure may be executed successively. Three or more injection operations may be executed successively. The injection with the maximum fuel pressure P1, the injection with the minimum fuel pressure P2 and the injection while changing the fuel pressure may be combined in an arbitrary order, and whether to provide an intermission or not between them is also arbitrary. The control of the fuel pressure may be made by changing a discharge amount of the high-pressure pump 14 and in this case, the variable fuel-pressure regulator is no longer necessary.

Also, the arrangement method and the shape of the collision plate may be appropriately changed within a range in which a function of atomizing the fuel injected from the fuel injection valve 7 and the function of guiding the fuel to the pretreatment catalytic converter 8 are maintained. An arbitrary number of through holes, recess parts and/or projection parts may be disposed in the collision plate 20, and the longitudinal section of the collision plate may be arc instead of straight. The collision member does not have to be plate-like and various shapes and structures can be employed. A configuration not having the collision member can be also employed, and in that case, the fuel from the fuel injection valve 7 may be made to collide with a pipe wall of the exhaust pipe 3.

At least one of the pretreatment catalytic converter (small-section catalytic converter) and the exhaust pipe may have a section in the shape other than a circle such as an oval or a long circle. The interval in the transverse direction of the exhaust pipe 3 may be such that the pretreatment catalytic converter 8 is closer to the fuel injection valve 7 than the heat generation portion of the glow plug 21 (ignition device).

The section of the pretreatment catalytic converter 8 in the transverse direction of the exhaust pipe 3 may extend over the entire inside of the exhaust pipe 3. The types and the order of the other catalytic converter devices located on the downstream side of the pretreatment catalytic converter 8 are also arbitrary.

### Reference Signs List

- 1: engine main body
- 3: exhaust pipe
- 6: oxidation catalytic converter
- 7: fuel supply valve
- 8: pretreatment catalytic converter
- 10: ECU
- 16: variable fuel-pressure regulator
- 20: collision plate
- 21: glow plug
- 26: NOx catalytic converter
- 30: burner device

## Claims

1. An exhaust device of an internal-combustion engine, comprising:
a catalytic converter arranged in an exhaust passage of the internal-combustion engine;
a fuel supply valve that is arranged on the upstream side of the catalytic converter and supplies fuel into the exhaust passage;
an ignition device capable of igniting the fuel supplied from the fuel supply valve;
a pressure regulating device that regulates the pressure of the fuel supplied to the fuel supply valve; and
a controller that controls the fuel supply valve and the pressure regulating device, wherein
the controller controls the fuel supply valve and the pressure regulating device so as to execute at least one of a plurality of injection operations having different fuel pressures from each other and performed successively, and a single injection operation performed while changing the fuel pressure.

2. The exhaust device of an internal-combustion engine according to claim 1, wherein
the ignition device is arranged in proximity to the catalytic converter;
the controller causes the fuel supply valve to execute a plurality of injection operations having fuel pressures different from each other and performed successively;
the plurality of injection operations include a first injection operation having a first fuel pressure and a second injection operation executed after the first injection operation and having a second fuel pressure smaller than the first fuel pressure.

3. The exhaust device of an internal-combustion engine according to claim 1, wherein
an interval in a transverse direction of the exhaust passage between a heat generation portion of the ignition device and the fuel injection valve is smaller than an interval in the transverse direction of the exhaust passage between a collision point with which the fuel supplied from the fuel injection valve collides and the fuel injection valve.
